## Europäisches Patentamt

## European Patent Office

## Office européen des brevets

(19)

(11) Publication number: **0 141 673**
**B1**

(12)

# EUROPEAN PATENT SPECIFICATION

(45) Date of publication of patent specification: **02.11.88**

(51) Int. Cl.⁴: **H 04 B 3/56**

(21) Application number: **84307661.3**

(22) Date of filing: **06.11.84**

(54) Filtering electrical signals.

(30) Priority: **07.11.83 GB 8329692**

(43) Date of publication of application:
**15.05.85 Bulletin 85/20**

(45) Publication of the grant of the patent:
**02.11.88 Bulletin 88/44**

(84) Designated Contracting States:
**AT BE CH DE FR IT LI LU NL SE**

(56) References cited:
**DE-A-1 955 712**
**DE-B-1 158 124**
**GB-A-2 091 976**

**PATENTS ABSTRACTS OF JAPAN, vol. 6, no.
16 (E-92)894r, 29th January 1982; & JP - A - 56
138 344 (MATSUSHITA DENKO K.K.) 28-10-
1981**

**PATENTS ABSTRACTS OF JAPAN, vol. 6, no.
205 (E-136)1083r, 16th October 1982; & JP - A -
57 113 639 (MATSUSHITA DENKO K.K.) 15-07-
1982**

(73) Proprietor: **EMLUX LIMITED**
**Industrial Estate Black Bourton Road**
**Carterton Oxfordshire (GB)**

(72) Inventor: **Crampton, Edward Christopher**
**Thomas**
**Wayside Cottage 78 High Street**
**Watchfield Swindon Wiltshire (GB)**

(74) Representative: **Cline, Roger Ledlie et al**
**c/o SWANN, ELT & COMPANY 31 Beaumont**
**Street**
**Oxford, OX1 2NP (GB)**

Courier Press, Leamington Spa, England.

## Description

FILTERING ELECTRICAL SIGNALS

Electrical cables (e.g. power cables for supplying AC mains currents to buildings) may carry AC currents of different frequencies. It is often desired to filter out currents of one band of frequencies while leaving substantially unaffected currents in another band of frequencies. Power cables within a building carry electrical currents at mains frequencies, e.g. normal AC currents at frequencies of 50 to 60 hertz and voltages of 100 to 500 volts. Higher or lower frequency currents (which may be termed "signals") may be superimposed on normal or other AC currents. For example, the same power cables within a given building may be used for carrying communication signals. Those signals are only wanted within the building, and should not travel to other buildings or to the central power station that supplies normal AC currents to the power cables, where the unwanted signals may cause interference. Power cables carrying a mains supply to a building carry high currents. It is dangerous to make connections and/or disconnections with the power cables while those high currents are flowing. But, it is not convenient to cut off the mains supply while such connections and/or disconnections are made.

W. German patent specification DE-B-1 158 124 discloses an electrical filter suitable for application to electrical cables including a line cable, a neutral cable, and an earth cable, the filter comprising: a first loop, suitable for encircling the line and neutral cables but not the earth cable; and a second loop, encircled by said first loop, and comprising a capacitor.

The present invention provides a power line communication system for electrical cables including a line cable, a neutral cable, and an earth cable, the system comprising at least one electrical filter, and characterised in that the filter comprises: a first loop (21), encircling the line and neutral cables but not the earth cable, and comprising ferrite material(s); and

a second loop (22), being encircled by the first loop, the second loop comprising a capacitor (23), the inductance of the first loop being adapted for coupling the capacitor to the neutral cable, so as to form a parallel LC circuit in the neutral cable, the inductance and capacitance of the capacitor being chosen so that the parallel circuit has maximum impedance at the centre of a bandwidth of signals to be filtered out of said electrical cables.

Because the current flows through the line and neutral cables are equal and opposite, the net current at the frequency band of the mains currents in the line and neutral cables is zero, and the present invention has substantially no effect on them.

The present invention may be applied in any suitable environment, and embodied in any suitable manner. The first loop may be an assembly for being assembled around the line and neutral cables. The assembly may comprise pieces of ferrite material(s), e.g. a split ferrite core securely clamped in place. Ferrite loops are known for use in electrical filters but not for the present invention. The second loop may be disposed in any suitable manner.

In some embodiments of the invention, a said filter is coupled to a series resonance circuit tuned to the frequency of signal(s) to be excluded, the series resonance circuit being coupled at its opposite ends respectively to the neutral cable and the earth cable. In some other embodiments of the invention, first and second said filters are disposed to form the cross arms of a T-filter, whose stem is formed by a said series resonance circuit. Said series resonance circuit may provide a sufficiently low impedance at the centre of said bandwidth so as to short circuit any signal(s) which may have passed through parallel circuit(s), e.g. from inside or outside a building. In some further embodiments of the invention, said electrical cables may be comprised by a 3-phase electrical distribution system. An advantage of connecting a communication system to the neutral and earth cables of a mains supply is that in a 3-phase electrical distribution system, the communication system may extend to all parts of a building to which any phase extends. In a communication system connected between the line and neutral cables, the coverage will only extend to the line cables of the one phase to which the system has been connected.

The present invention may filter out communication signals from AC mains currents, e.g. normal AC currents in power cables. The present invention may be applied to any frequencies outside those used by an AC mains supply. For example, the present invention may be applied to a bandwidth of signals in the range 20 to 500 kilohertz.

Besides wishing to keep communication signals in the power cables within a building from passing out of the building, it may be desirable to keep communication signals in the power cables outside the building from entering the building. A first said filter may be provided inside the building, and a second said filter may be provided outside the building. Those two filters may be the cross arms of a said T-filter, whose stem is a said series resonance circuit, tuned to the same communication frequency so as to provide a very low impedance at the centre of the band of communication frequencies which may have passed through parallel circuits either from inside or outside the building.

Some examples of the present invention will now be described with reference to the accompanying drawings, in which.

Fig. 1 is a schematic diagram of a power line communication system containing an electrical filter.

Fig. 2 is an equivalent circuit of the filter of Fig. 1.

Fig. 3 is a further equivalent circuit of the filter of Fig. 1.

Fig. 4 shows a T-filter arrangement using the filter of Fig. 1.

Fig. 5 is an equivalent circuit of the filter of Fig. 4.

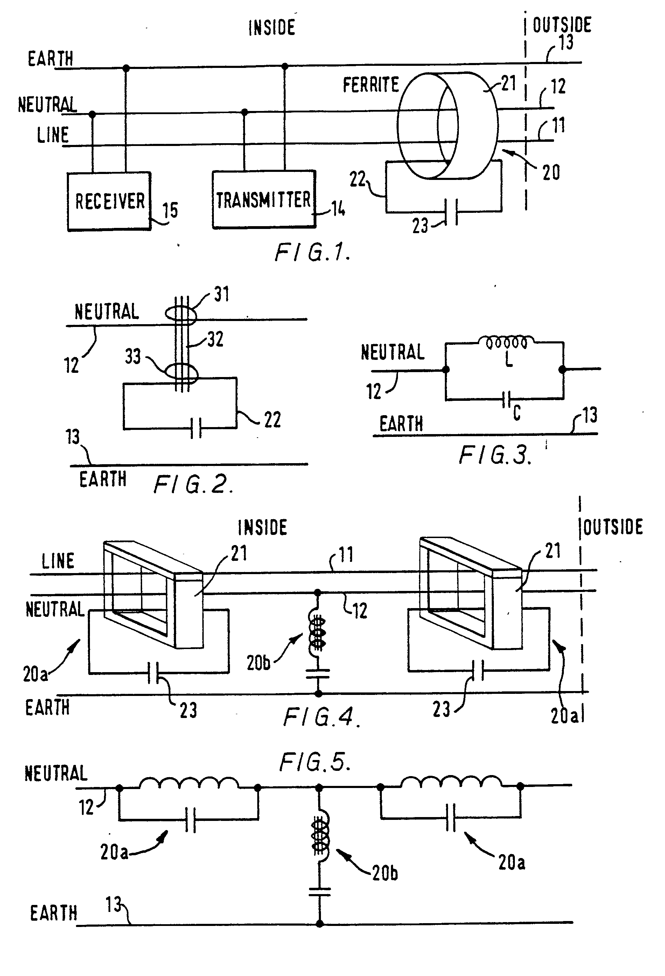

In Fig. 1, the AC mains supply of a building comprises a line cable or wire 11, a neutral cable or wire 12, and an earth cable or wire 13. In the building, a communication system comprises a transmitter 14 connected between the neutral cable 12 and the earth cable 13. A plurality of receivers 15 (only one is shown) is also connected between the neutral cable 12 and the earth cable 13. The communication system operates at a very much higher frequency than the mains frequency, of the order of 100 kilohertz. A filter 20 is provided where the mains supply enters the building so as to stop communication frequency signals passing outside the building on the mains cables, and also to prevent spurious signals on the mains cables outside the building from interfering with the communication system in the building. Filter 20 comprises a ferrite loop 21, encircling the line cable 11 and the neutral cable 12. Ferrite loop 21 also encircles loop 22 containing a capacitor 23. Ferrite loop 21 may be made in two or more parts which are fitted together around the line and neutral cables 11,12 without the need to break those cables on assembly of filter 20. The earth cable 13 does not pass through ferrite loop 21. The line and neutral cables 11,12 pass through ferrite loop 21, whereas the neutral and earth cables 12,13 are used for the communication system in the present example.

In Fig. 2, the equivalent circuit shows the interaction of neutral cable 12 and ferrite loop 21. The interaction is shown as a single turn 31 in the neutral cable 12 around a core 32 which transfers magnetic flux to a single turn in the loop 22 containing capacitor 23. The transformer ratio may be altered by providing more than one turn of loop 22 around ferrite loop 21.

In Fig. 3, the equivalent circuit shows transformer coupling via ferrite loop 21 which brings capacitor 23 into a parallel resonance circuit L,C in neutral cable 12, the inductance L being of the ferrite loop 21, and the capacitance C being of capacitor 23. The values of the inductance and capacitance are chosen so that the centre of the band of communication frequencies is equal to 1/2 LC, wherein 1 is measured in Henrys, C is measured in farads, and frequency is measured in hertz (i.e. cycles per second). Filter 20 provides a high impedance at the communication frequency where the cables leave the building, whereas the impedance between the neutral and earth cables 12,13 without filter 20 is relatively low. Thus, communication signals are therefore restricted within the building. However, the mains current is unaffected by ferrite loop 21, because line and neutral cables 11,12 pass through ferrite loop 21 and the net current passing through line and neutral cables 11,12 is zero. A ferrite loop which encircles only one of line and neutral cables 11,12 having a high net current would therefore have to be built to withstand the high mains current that might be encountered.

In order to prevent communication signals outside the building from entering the building and interfering with the communication system in the building, a second filter may be provided where the cables enter the building so as to prevent communication frequency signals entering the building. Fig. 4 shows two filters 20a according to Fig. 1, and in a T-filter arrangement whose arms respectively contain those filters, and whose stem is a series resonance circuit 20b having its opposite ends respectively connected to the neutral and earth cables 12,13. The series resonance circuit is tuned to the centre of the communication frequency band so as to absorb signals that may have passed through the filters 20a in either direction. The series resonance circuit may easily be connected without interfering with the mains supply, by piercing the insulation of the neutral cable 12 and connection to a suitable earth point. Fig. 5 shows the equivalent circuit of the T-filter arrangement. The series resonance circuit 20b has a ferrite core in its coil.

**Claims**

1. A power line communication system for electrical cables including a line cable, a neutral cable, and an earth cable, the system comprising at least one electrical filter, and characterised in that the filter comprises:
a first loop (21), encircling the line and neutral cables but not the earth cable, and comprising ferrite material(s); and
a second loop (22), being encircled by the first loop, the second loop comprising a capacitor (23), the inductance of the first loop being adapted for coupling the capacitor to the neutral cable, so as to form a parallel LC circuit in the neutral cable, the inductance and capacitance of the capacitor being cosen so that the parallel circuit has maximum impedance at the centre of a bandwidth of signals to be filtered out of said electrical cables.

2. A power line communication system as claimed in claim 1, characterised in that said first loop is an assembly for being assembled around the line and neutral cables.

3. A power line communication system as claimed in claim 1 or 2, characterised in that a said filter is coupled to a series resonance circuit (20b) tuned to the frequency of signal(s) to be excluded, the series resonance circuit being coupled at its opposite ends respectively to the neutral cable and earth cable.

4. A power line communication system as claimed in claim 3, characterised in that first and second said filters are the cross arms of a T-filter, whose stem is formed by a said series resonance circuit.

5. A power line communication system as claimed in any one of claims 1 to 4, characterised in that said electrical cables are comprised by a 3-phase electrical distribution system. 1.

**Patentansprüche**

1. Starkstromübertragungssystem für elektrische Kabel mit einem Phasenleiter, einem Nulleiter und einem Erdleiter, wobei das System wenigstens ein elektrisches Filter enthält, dadurch gekennzeichnet, daß das Filter besteht aus: einer ersten Schleife (21), die den Phasenleiter und den Nulleiter, jedoch nicht den Erdleiter umschließt und aus ferritischem Material besteht; und einer zweiten Schleife (22), die von der ersten Schleife umschlossen ist und einen Kondensator (23) enthält, wobei die Induktanz der ersten Schleife zum Ankuppeln des Kondensators an den Nulleiter ausgelegt ist, derart, daß ein Parallel-LC-Kreis in dem Nulleiter gebildet wird, wobei die Induktanz und die Kapazitanz des Kondensators so ausgewählt sind, daß der Parallelkreis eine maximale Impedanz in der Mitte der Bandbreite der aus dem elektrischen Kabel herauszufilternden Signale hat.

2. Starkstromübertragungssystem nach Anspruch 1, dadurch gekennzeichnet, daß die erste Schleife eine Baugruppe zur Anbringung rings um den Phasenleiter und den Nulleiter ist.

3. Starkstromübertragungssystem nach Anspruch 1 oder 2, dadurch gekennzeichnet, daß das Filter an einen Reihenresonanzkreis (20b) angeschlossen ist, der auf die zu unterdrückende Signalfrequenz abgestimmt ist, wobei der Reihenresonanzkreis mit seinen entgegengesetzten Enden an den Nulleiter bzw. den Erdleiter angeschlossen ist.

4. Starkstromübertragungssystem nach Anspruch 3, dadurch gekennzeichnet, daß ein erstes und ein zweites Filter die Querarme eines T-Filters bilden, dessen Schaft von dem Serienresonanzkreis gebildet ist.

5. Starkstromübertragungssystem nach einem der Ansprüche 1 bis 4, dadurch gekennzeichnet, daß die elektrischen Kabel in einem elektrischen Dreiphasen-Verteilernetz enthalten sind.

**Revendications**

1. Système de communication sur ligne de fourniture de puissance pour câbles électriques, comportant un câble de phase, un câble neutre, et un câble de terre, le système comportant au moins un filtre électrique, et caractérisé par le fait que le filtre comprend:
une première boucle (21), encerclant les câbles de phase et du neutre mais pas le câble de terre, et comportant un ou des matériau(x) en ferrite; et
une seconde boucle (22), entourée par la première, la seconde boucle comprenant un condensateur (23), l'inductance de la première boucle étant adaptée pour coupler le condensateur au câble neutre, de façon à former un circuit parallèle LC dans le câble neutre, l'inductance et la capacité du condensateur étant choisi de telle sorte que le circuit parallèle a une impédance maximum au centre d'une bande de signaux à filtrer desdits câbles électriques.

2. Système de communication sur ligne de fourniture de puissance selon la revendication 1, caractérisé par le fait que ladite première boucle est un assemblage devant être assemblé autour des câbles de phase et du neutre.

3. Système de communication sur ligne de fourniture de puissance selon la revendication 1 ou 2, caractérisé par le fait que ledit filtre est couplé à un circuit résonnant série (20b) accordé sur la fréquence du ou des signaux à éliminer, le circuit résonnant série étant relié à ses extrémités opposées au câble neutre et un câble de terre respectivement.

4. Système de communication sur ligne de fourniture de puissance selon la revendication 3, caractérisé par le fait que lesdits premier et second filtres sont les branches latérales d'un filtre en T dont la branche verticale est formée par ledit circuit résonnant série

5. Système de communication sur ligne de fourniture de puissance selon l'une quelconque des revendications 1 à 4, caractérisé par le fait que lesdits câbles électriques font partie d'un système de distribution électrique triphasé.

FIG.1.

FIG.2.

FIG.3.

FIG.4.

FIG.5.